(19) Europäisches Patentamt
European Patent Office
Office européen des brevets

(11) **EP 4 564 452 A1**

(12) **EUROPEAN PATENT APPLICATION**
published in accordance with Art. 153(4) EPC

(43) Date of publication:
**04.06.2025 Bulletin 2025/23**

(21) Application number: **23846615.5**

(22) Date of filing: **27.07.2023**

(51) International Patent Classification (IPC):
$H01M\ 4/133^{(2010.01)}$      $H01M\ 4/134^{(2010.01)}$
$H01M\ 4/36^{(2006.01)}$      $H01M\ 4/38^{(2006.01)}$
$H01M\ 4/587^{(2010.01)}$

(52) Cooperative Patent Classification (CPC):
**H01M 4/133; H01M 4/134; H01M 4/36; H01M 4/38; H01M 4/587;** Y02E 60/10

(86) International application number:
**PCT/JP2023/027564**

(87) International publication number:
**WO 2024/024885 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 JP 2022122186**

(71) Applicant: **Panasonic Energy Co., Ltd.**
**Osaka 570-8511 (JP)**

(72) Inventor: **IWAMI, Yasunobu**
**Kadoma-shi, Osaka 571-0057 (JP)**

(74) Representative: **Novagraaf International SA**
**Chemin de l'Echo 3**
**1213 Onex, Geneva (CH)**

(54) **SECONDARY BATTERY**

(57)      A secondary battery includes a positive electrode, a negative electrode, and an electrolyte. The negative electrode contains a negative electrode active material. The negative electrode active material contains a silicon-containing material and a graphite material. The single particle fracture strength of the graphite material is in a range of 10 to 40 MPa, and the single particle fracture strength of the silicon-containing material is in a range of 350 to 550 MPa. A secondary battery having a high capacity retention rate after charge-discharge cycles can be thus provided.

*Figure*

EP 4 564 452 A1

## Description

[Technical Field]

The present disclosure relates to a secondary battery.

[Background Art]

Silicon-containing materials, such as silicon (Si) and silicon oxides, are known as capable of absorbing more lithium ions per unit volume than carbon materials, such as graphite. There has been a proposal therefore to use a silicon-containing material in the negative electrode of lithium-ion secondary batteries.

Patent Literature 1 proposes "a nonaqueous electrolyte secondary battery comprising: a positive electrode plate having a positive electrode mixture layer containing a positive electrode active material capable of absorbing and releasing lithium ions; a negative electrode plate having a negative electrode mixture layer containing a negative electrode active material capable of absorbing and releasing lithium ions; a separator; and a nonaqueous electrolyte, wherein the negative electrode active material is a mixture of a graphite material and a silicon oxide represented by $SiOx$ where $0.5 \leq x < 1.6$, and a fracture strength ratio Ss/Sg of a fracture strength Ss of a single particle of the silicon oxide to a fracture strength Sg of a single particle of the graphite material is 60 to 90."

[Citation List]

[Patent Literature]

Patent Literature 1: Japanese Laid-Open Patent Publication No. 2015-185407

[Summary of Invention]

[Technical Problem]

In order to allow the graphite material to absorb the stress of expansion and contraction of the SiOx, Patent Literature 1 proposes using a soft graphite material. However, soft graphite is crushed during charging, and much of the electrolyte is pushed out from the negative electrode, making it difficult to retain sufficient electrolyte in the negative electrode. When the battery is discharged in a state where the electrolyte is not present sufficiently in the vicinity of the negative electrode active material, the interface resistance increases, and the load characteristics deteriorate. In the production process, too, when the graphite material is soft, it is rolled too much, and the ion conduction paths in the negative electrode decrease. As a result of the above, it is difficult to obtain sufficient charge-discharge cycle characteristics.

[Solution to Problem]

One aspect of the present disclosure relates to a secondary battery, including a positive electrode, a negative electrode, and an electrolyte, wherein the negative electrode contains a negative electrode active material, the negative electrode active material contains a silicon-containing material and a graphite material, a single particle fracture strength of the graphite material is in a range of 10 to 40 MPa, and a single particle fracture strength of the silicon-containing material is in a range of 350 to 550 MPa.

[Advantageous Effects of Invention]

According to the present disclosure, it is possible to obtain a secondary battery whose capacity retention rate in charge-discharge cycles is high.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

[Figure] A partially cut-away schematic oblique view of a secondary battery according to one embodiment of the present invention.

EP 4 564 452 A1

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

Secondary batteries include at least nonaqueous electrolyte secondary batteries, such as lithium-ion batteries and lithium-metal secondary batteries.

A secondary battery according to one embodiment of the present disclosure includes a positive electrode, a negative electrode, and an electrolyte. The negative electrode contains a negative electrode active material, and the negative electrode active material contains a silicon-containing material and a graphite material.

The ratio of the sum of the masses of the silicon-containing material and the graphite material to the mass of the whole negative electrode active material may be 60 mass% or more, 80 mass% or more, 90 mass% or more, or 95 mass% or more, and may be 100 mass% or less.

The ratio of the mass of the silicon-containing material to the sum of the masses of the graphite material and the silicon-containing material may be 1 mass% or more, 3 mass% or more, 5 mass% or more, or 10 mass% or more, and may be 40 mass% or less, 30 mass% or less, or 20 mass% or less. For example, the content ratio of the silicon-containing material relative to the total of the silicon-containing material and the graphite material in the negative electrode active material may be 1 mass% or more and 12 mass% or less. Within such a range, the expansion and contraction of the negative electrode as a whole can be controlled in a more suitable range, and the merit of the high capacity attributed to the silicon-containing material can be gained to the maximum.

The content ratio of the silicon-containing material relative to the total of the silicon-containing material and the graphite material in the negative electrode active material may be determined, with the ratio of the area of the silicon-containing material to the area of the graphite material in a cross section of the negative electrode regarded as a volume ratio. In other words, from the ratio between these areas and the specific gravities of the silicon-containing material and the graphite material, the content ratio of the silicon-containing material may be estimated. For example, a secondary battery is disassembled to take out the negative electrode, and the negative electrode is washed with anhydrous ethyl methyl carbonate or dimethyl carbonate. The negative electrode is cut perpendicular to the surface of the negative electrode current collector, and the cross section of the negative electrode mixture layer is polished by ion milling. The backscattered electron image of the cross section is observed with a scanning electron microscope (SEM), to calculate the area of the silicon-containing material and the area of the graphite material observed in the cross section. The silicon-containing material and the graphite material can be distinguished because they have different brightness in the backscattered electron image.

(Silicon-containing material)

The silicon-containing material means a silicon alloy, a silicon compound, a composite material containing silicon, and the like. The composite material containing silicon may have a so-called sea-island structure, and the silicon phase may constitute islands. The composite material containing silicon may be composite particles each including an ion-conducting phase and silicon phases (in one aspect, silicon particles) dispersed in the ion-conducting phase. The ion-conducting phase is a phase that conducts ions. The ion-conducting phase may be at least one selected from the group consisting of a silicate phase, a carbon phase, and a silicon oxide phase. These materials are in the form of particles and available by various methods.

In particular, a composite material including a carbon phase and silicon phases dispersed in the carbon phase is flexible and highly conductive, and can maintain a favorable conductive network within the negative electrode even when the graphite material cannot sufficiently absorb stress. Specifically, even when voids are formed around the silicon-containing material or cracks occur in the silicon-containing material, partial isolation of the silicon-containing material is unlikely to occur, and the contacts between the silicon-containing material and its surroundings are likely to be maintained. Therefore, the decrease in capacity during repeated charge-discharge cycles can be easily be suppressed. Furthermore, the expansion of the negative electrode hardly occurs.

The composite material including a carbon phase and silicon phases dispersed in the carbon phase can be present in the form of particles having a sea-island structure. The silicon phases (islands) are dispersed in a matrix (sea) of the carbon phase and are covered with the carbon phase. In the sea-island structure, contacts between the silicon phases and the electrolyte are restricted, leading to suppressed side reactions. In addition, the stress generated along with expansion and contraction of the silicon phases are relaxed by the matrix of the carbon phase.

The carbon phase, which is an ion-conducting phase, may be composed not of a material with a developed graphite-like crystal structure like a graphite material, but of, for example, amorphous carbon (formless carbon). Examples of the amorphous carbon constituting the carbon phase include hard carbon, soft carbon, and other amorphous carbon. Amorphous carbon is a carbon material in which the average interplanar spacing $d002$ of the (002) plane measured by X-ray diffractometry exceeds 0.34 nm.

The average particle diameter of the silicon phases dispersed in the carbon phase may be 1 nm or more, or 5 nm or more. The above average particle diameter may be 1000 nm or less, 500 nm or less, 200 nm or less, 100 nm or less, or 50 nm or less. Fine silicon phases are preferable in that they exhibit small volume change during charging and discharging, leading to improved structural stability of the silicon-containing material.

The average particle diameter of the silicon phases can be measured by observing a cross section of the particles of the Si-containing material with a SEM (scanning electron microscope) or a TEM (transmission electron microscope). Specifically, the maximum diameters of randomly selected 100 particulate silicon phases are averaged.

The crystallite size of the silicon phase is preferably 30 nm or less. When the crystallite size is 30 nm or less, the amount of volume change of the silicon-containing material due to the expansion and contraction of the silicon phases during charging and discharging can be made smaller. The crystallite size is more preferably 30 nm or less, even more preferably 20 nm or less. When the crystallite size is 20 nm or less, the expansion and contraction of the silicon phases are balanced, and microcracks in the silicon phase are reduced, leading to further improved cycle characteristics.

The crystallite size of the silicon phase is calculated using the Scherrer's formula from the half-value width of a diffraction peak belonging to the (111) plane of the silicon phase (simple substance Si) in an X-ray diffraction (XRD) pattern.

The silicon phase content in the silicon-containing material may be, for example, 30 mass% or more, 40 mass% or more, or 50 mass% or more, and may be 80 mass% or less, or 70 mass% or less. Within this range, a sufficiently high capacity of the negative electrode can be achieved, and the cycle characteristics can also be easily improved. In addition, a considerable proportion of the carbon phase is maintained, so that the carbon phase is likely to enter into the voids which will be generated in a later stage associated with charging and discharging, and, for example, the electrical connection between the silicon-containing material and its surroundings is likely to be maintained.

The average particle diameter of the silicon-containing material may be 1 $\mu$m or more, or 5 $\mu$m or more, and may be 20 $\mu$m or less, 15 $\mu$m or less, or 10 $\mu$m or less. The average particle diameter D50(s) of the silicon-containing material may be a median diameter (diameter at 50% cumulative volume) in a volume-based particle size distribution measured with a laser diffraction-scattering type particle size distribution analyzer.

(Graphite material)

The graphite material means a material with a developed graphite-like crystal structure, and in general, refers to a material in which the interplanar spacing $d002$ of the (002) plane measured by an X-ray diffractometry is 0.340 nm or less. For example, natural graphite, artificial graphite, graphitized mesophase carbon particles, and the like are typical graphite materials. The graphite material is particulate, and those with various average particle diameters and average circularities are commercially available.

The average particle diameter of the graphite material may be 5 $\mu$m or more, or 10 $\mu$m or more, and may be 50 $\mu$m or less, or 30 $\mu$m or less. The average particle diameter D50(c) of the graphite material may be a median diameter (diameter at 50% cumulative volume) in a volume-based particle size distribution measured with a laser diffraction-scattering type particle size distribution analyzer.

In one example of the negative electrode, the average particle diameter of the graphite material is in a range of 10 to 30 $\mu$m, and the average particle diameter of the silicon-containing material is in a range of 1 to 15 $\mu$m. With this configuration, the charge-discharge cycle characteristics become particularly favorable.

In one example of the negative electrode, the value of (average particle diameter of silicon-containing material) / (average particle diameter of graphite material) is less than 1, and may be 0.8 or less, 0.6 or less, or 0.5 or less. The lower limit of this value is not particularly limited, and may be 0.05 or more, 0.1 or more, or 0.2 or more. By setting this value to 0.5 or less, the charge-discharge cycle characteristics become particularly favorable.

The negative electrode active material may contain, in addition to the graphite material, a carbon material, such as hard carbon and soft carbon. Hard carbon is a carbon material in which minute graphite crystals are arranged in random directions, causing almost no further graphitization to proceed. The average interplanar spacing d002 of the 002 plane thereof is greater than 0.38 nm. Hard carbon has low resistance and is preferable in terms of its high capacity. However, a graphite material is most preferable in terms of its high capacity and small irreversible capacity.

The mass ratio of the carbon material other than the graphite material to the mass of the graphite material contained in the negative electrode active material is desirably 30 mass% or less, and desirably 20 mass% or less or 10 mass% or less.

(Single particle fracture strength)

Here, a single particle fracture strength (Fs) of the silicon-containing material is in a range of 350 to 550 MPa. The single particle fracture strength of the silicon-containing material may be in a range of 380 to 500 MPa. The single particle fracture strength in such a range can be said to be relatively small for a silicon-containing material. Therefore, even under the situation where the expansion and contraction are great, the stress can be relaxed to some extent because the silicon-containing material can deform itself. When the single particle fracture strength of the silicon-containing material is less than 350 MPa, the particles of the silicon-containing material become brittle and cannot sufficiently follow the expansion and contraction of silicon, and the charge-discharge cycle characteristics tend to deteriorate. When the single particle fracture strength of the silicon-containing material exceeds 550 MPa, the graphite is excessively compressed in the production process of the negative electrode, and the ion conduction paths in the negative electrode decrease, and the charge-discharge cycle characteristics under high load tend to deteriorate.

The method for controlling the single particle fracture strength (Fs) of the silicon-containing material is not particularly limited. For example, the single particle fracture strength may be controlled to be a target value by a manufacturing method of a silicon-containing material. Such a method includes, for example, a method of applying pressure, under heating, to the silicon-containing material before pulverization. The heating temperature may be, for example, 300 °C to 800 °C.

A single particle fracture strength (Fc) of the graphite material is in a range of 10 to 40 MPa. The single particle fracture strength of the graphite material may be in a range of 12 to 20 MPa. Using such a hard graphite material can suppress the phenomenon in which the graphite material is crushed during charging, and much of the electrolyte is pushed out from the negative electrode, or the phenomenon in which the graphite material is rolled too much in the production process. Therefore, not only the charge-discharge cycle characteristics but also the load characteristics of the secondary battery can be improved. When the single particle fracture strength of the graphite material is less than 10 MPa, the graphite material is rolled excessively in the production process, and the ion conduction paths in the negative electrode decrease, and the charge-discharge cycle characteristics under high load tend to deteriorate. When the single particle fracture strength of the graphite material exceeds 40 MPa, the residual stress during rolling increases, and the internal pressure of the electrode group increases significantly due to the expansion of the negative electrode, and the nonaqueous electrolyte tends to be pushed out from the electrode group.

The method for controlling the single particle fracture strength (Fc) of the graphite material is also not particularly limited. An exemplary method is to apply a pressure to the graphite material. Such a method may be, for example, cold isostatic pressing. The number of times of processing may be adjusted to control the single particle fracture strength to a target value. The single particle fracture strength may be controlled by processing the particle shape of the graphite material.

The value of (single particle fracture strength (Fc) of graphite material) / (single particle fracture strength (Fs) of graphite material) is, for example, 0.1 or less, and may be 0.08 or less, 0.06 or less, or 0.05 or less. The lower limit of this value may be 0.015 or more, 0.02 or more, or 0.03 or more. By setting the value within such a range, the charge-discharge cycle characteristics become particularly favorable.

The single particle fracture strength of each of the graphite material and the silicon-containing material can be measured using a commercially available measuring device (e.g., Micro Compression Tester (MCT-W201) available from Shimadzu Corporation) by the following procedure.

(1) A graphite material or a silicon-containing material is spread over a lower pressing plate (SKS flat plate) of the measuring device.
(2) A particle with a size close to the average particle diameter D50(c) of the graphite material or the average particle diameter D50(s) of the silicon-containing material is selected as a sample, with an optical microscope.
(3) A diamond flat indenter with a diameter of 50 μm is used as an upper pressing bar, so that only one particle selected as the sample is present between the upper pressing bar and the lower pressing plate.
(4) The upper pressing bar is lowered slowly, and from when it comes in contact with the sample (the lowering speed changes), a load is applied to the sample at a constant acceleration (specifically, a displacement rate 2.7 mN/sec).
(5) The relationship between the load and the amount of deformation of the sample is measured, and the point where the amount of deformation of the sample changes abruptly (the inflection point of the load-deformation profile) is taken as a breaking point, and from the load and the particle diameter at that point, the fracture strength is calculated based on the following equation. The fracture strength is calculated by averaging values obtained from five measurements.

$$St = 2.8P/\pi d^2$$

St: fracture strength [MPa or N/mm$^2$]
P: load [N]
d: particle diameter [mm]

The sample of the graphite material desirably has a maximum diameter of $\pm 5\%$ of the average particle diameter D50(c) of the graphite material. The sample of the silicon-containing material desirably has a maximum diameter of $\pm 5\%$ of the average particle diameter D50(s) of the silicon-containing material. The degree of sphericity of each sample is preferably 85% or more. The degree of sphericity may be calculated as a diameter of a circle having the same area as that in the TEM or SEM image.

The graphite material and the silicon-containing material as objects to be measured may be prepared by disassembling a secondary battery to take out the negative electrode, peeling off the negative electrode mixture from the negative electrode, washing the negative electrode mixture with anhydrous ethyl methyl carbonate or dimethyl carbonate, crushing the negative electrode mixture in a mortar, and separating the components by centrifugation or other methods. The crushed sample of the negative electrode mixture is dried for 1 hour in a dry atmosphere, and immersed in weakly boiled 6M hydrochloric acid for 10 minutes. Then, the sample is washed with ion-exchanged water, and after filtration, dried at 200 °C for 1 hour. Thereafter, centrifugation or the like is performed.

Next, with regard to a method for producing a silicon-containing material, two methods will be described as examples.

(a) First method

Raw material silicon and a carbon source are mixed together, and using a pulverizer like a ball mill, the mixture of raw material silicon and a carbon source, while being micronized, is pulverized and formed into a composite. The mixture may be added with an organic solvent. At this time, the raw material silicon is finely pulverized, into silicon phases. The silicon phases are dispersed in a matrix of the carbon source.

Examples of the carbon source that can be used include water-soluble resins, such as carboxymethyl cellulose (CMC), hydroxyethyl cellulose, polyacrylates, polyacrylamide, polyvinyl alcohol, polyethylene oxide, and polyvinylpyrrolidone, saccharides, such as cellulose and sucrose, petroleum pitch, coal pitch, and tar, but are not limited thereto.

Examples of the organic solvent that can be used include alcohols, ethers, fatty acids, alkanes, cycloalkanes, silicate esters, and metal alkoxides.

Next, the composite of the silicon phases and the carbon source is heated to 700 °C to 1200 °C in an inert gas atmosphere (e.g., an atmosphere of argon, nitrogen, etc.) to carbonize the carbon source, into formless carbon. In this way, a silicon-containing material in which silicon phases are dispersed in a carbon phase containing formless carbon can be obtained.

(b) Second method

Raw material silicon and a carbon material are mixed together, and using a pulverizer like a ball mill, the mixture of raw material silicon and a carbon material, while being micronized, is pulverized and formed into a composite. The mixture may be added with an organic solvent. At this time, the raw material silicon is finely pulverized, into silicon phases. The silicon phases are dispersed in a matrix of the carbon material.

By forming raw material silicon and a carbon material into a composite as described above, a silicon-containing material in which the silicon phases are dispersed in the carbon phase of formless carbon is obtained. Thereafter, the silicon-containing material may be heated to 700 °C to 1200 °C in an inert gas atmosphere.

As the carbon material, formless carbon is preferred, and graphitizable carbon (soft carbon), non-graphitizable carbon (hard carbon), carbon black, and the like can be used. Examples of the carbon black include acetylene black and Ketjen black. Even when graphite is used as the carbon material, in the process of obtaining a composite of silicon and a carbon material using a pulverizer, a majority of the graphite crystal structure is lost, and a carbon phase of formless carbon is formed.

(Example of configuration of secondary battery)

An example of the configuration of a secondary battery according to the present disclosure will be described below. Except for using the above-described negative electrode active material as a negative electrode active material, other components can be variously selected. For example, for components other than the negative electrode active material, known components may be used. A secondary battery according to the present disclosure usually includes a positive electrode, a negative electrode, an electrolyte, and a separator disposed between the positive electrode and the negative electrode. Description of these components will be given below.

[Negative electrode]

The negative electrode includes, for example, a negative electrode current collector, and a negative electrode mixture layer formed on a surface of the negative electrode current collector and containing the negative electrode active material. The negative electrode mixture layer can be formed by applying a negative electrode slurry of a negative electrode mixture dispersed in a dispersion medium onto a surface of the negative electrode current collector, followed by drying. The applied film after drying may be rolled, if necessary.

The negative electrode mixture contains the negative electrode active material as an essential component, and can contain a binder, a conductive agent, a thickener, and the like, as optional components. The negative electrode active material includes a carbon material and a silicon-containing material.

Examples of the negative electrode current collector include a non-porous conductive substrate (e.g., metal foil) and a porous conductive substrate (e.g., mesh, net, punched sheet). Examples of the material of the negative electrode current collector include stainless steel, nickel, nickel alloy, copper, and copper alloy.

Examples of the binder include fluorocarbon resin, polyolefin resin, polyamide resin, polyimide resin, vinyl resin, styrene-butadiene copolymer rubber (SBR), polyacrylic acid and derivatives thereof. These may be used singly or in combination of two or more kinds.

Examples of the conductive agent include carbon black, conductive fibers, fluorinated carbon, and organic conductive materials. These may be used singly or in combination of two or more kinds.

Examples of the thickener include carboxymethyl cellulose (CMC), and polyvinyl alcohol. These may be used singly or in combination of two or more kinds.

Examples of the dispersion medium include water, alcohols, ethers, N-methyl-2-pyrrolidone (NMP), and mixed solvents of these.

[Positive electrode]

The positive electrode includes, for example, a positive electrode current collector, and a positive electrode mixture layer formed on a surface of the positive electrode current collector. The positive electrode mixture layer can be formed by applying a positive electrode slurry of a positive electrode mixture dispersed in a dispersion medium onto a surface of the positive electrode current collector, followed by drying. The applied film after drying may be rolled, if necessary.

The positive electrode mixture includes a positive electrode active material as an essential component, and may further include a binder, a conductive agent, and the like, as optional components.

As the positive electrode active material, a material that absorbs and releases lithium ions can be used. As the positive electrode active material, a known positive electrode active material used in nonaqueous electrolyte secondary batteries may be used. Examples of the positive electrode active material include a lithium composite metal oxides. Examples of the lithium composite metal oxides include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMePO_4$, $Li_2MePO_4F$. Here, M represents at least one selected from Na, Mg, Sc, Y, Mn, Fe, Co, Ni, Cu, Zn, Al, Cr, Pb, Sb, and B. Me includes at least transition element (e.g., at least one selected from the group consisting of Mn, Fe, Co, and Ni). Here, $0 \leq a \leq 1.2$, $0 \leq b \leq 0.9$, and $2.0 \leq c \leq 2.3$. The value "a" representing the molar ratio of lithium is a value immediately after the preparation of the active material and is subjected to increase and decrease during charging and discharging.

Examples of the binder and the conductive agent may be like those exemplified for the negative electrode. Additional examples of the conductive agent include graphite, such as natural graphite and artificial graphite.

For the positive electrode current collector, a conductive substrate having a shape similar to that described for the negative electrode current collector can be used. Examples of the material of the positive electrode current collector include stainless steel, aluminum, aluminum alloy, and titanium.

[Electrolyte]

The electrolyte may be a liquid electrolyte (electrolyte solution), may be a gel electrolyte, and may be a solid electrolyte. The liquid electrolyte (electrolyte solution) contains a solvent and a lithium salt dissolved in the solvent. The concentration of the lithium salt in the electrolyte is, for example, 0.5 mol/L to 2 mol/L. The electrolyte may contain a known additive.

The solvent may be aqueous or nonaqueous. The nonaqueous solvent may be, for example, a cyclic carbonic acid ester, a chain carbonic acid ester, or a cyclic carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL) and $\gamma$-valerolactone (GVL). The nonaqueous solvent may be used singly, or in combination of two or more kinds.

Examples of the lithium salt include a lithium salt of a chlorine-containing acid (e.g., $LiClO_4$, $LiAlCl_4$, $LiB_{10}Cl_{10}$), a lithium salt of a fluorine-containing acid (e.g., $LiPF_6$, $LiBF_4$, $LiSbF_6$, $LiAsF_6$, $LiCF_3SO_3$, $LiCF_3CO_2$), a lithium salt of a fluorine-containing acid imide (e.g., $LiN(CF_3SO_2)_2$, $LiN(CF_3SO_2)(C_4F_9SO_2)$, $LiN(C_2F_5SO_2)_2$), and a lithium halide (e.g., LiCl, LiBr, LiI). The lithium salt may be used singly or in combination of two or more kinds.

The electrolyte may contain, for example, 1 mass% to 5 mass% of vinylene carbonate (VC). The electrolyte may contain, for example, 0.5 mass% to 5 mass% of fluoroethylene carbonate (FEC).

The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include fluorocarbon resin, acrylic resin, polyether resin, and polyethylene oxide.

The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

The secondary battery of the present embodiment may be a nonaqueous electrolyte secondary battery using a nonaqueous electrolyte. The nonaqueous electrolyte is obtained by, for example, dissolving a lithium salt in a nonaqueous solvent.

[Separator]

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. As the material of the separator, polyolefin, such as polypropylene and polyethylene, can be used.

An example of the secondary battery includes an electrode group, an electrolyte, and an outer body housing them. The electrode group may be a wound electrode group in which a positive electrode and a negative electrode are wound with a separator interposed therebetween. The electrode group may be in another form. For example, the electrode group may be a stacked electrode group in which a positive electrode and a negative electrode are stacked with a separator interposed therebetween. The secondary battery may be of any form, and may be, for example, of a form of cylindrical type, square type, coin type, button type, laminated type, or the like.

Figure is a partially cut-away schematic oblique view of a secondary battery according to one embodiment of the present disclosure. Note that the battery shown in Figure is an example, and the secondary battery of the present disclosure is not limited to the battery shown in Figure.

The battery includes a bottomed rectangular battery case 4, an electrode group 1 and an electrolyte (not shown) housed in the battery case 4, and a sealing plate 5 sealing the opening of the battery case 4. The electrode group 1 includes a long belt-shaped negative electrode, a long belt-shaped positive electrode, and a separator interposed therebetween. The sealing plate 5 includes a liquid injection port closed with a sealing plug 8 and a negative electrode terminal 6 insulated from the sealing plate 5 via a gasket 7.

To the negative electrode current collector, a negative electrode lead 3 is attached at its end by welding or the like. To the positive electrode current collector, a positive electrode lead 2 is attached at its end by welding or the like. The other end of the negative electrode lead 3 is electrically connected to the negative electrode terminal 6. The other end of the positive electrode lead 2 is electrically connected to the sealing plate 5.

[Examples]

In the following, the present disclosure will be specifically described with reference to Examples and Comparative Examples. The present disclosure, however, is not limited to the following Examples. A plurality of secondary batteries were fabricated in the following manner.

<<Examples 1 to14, Comparative Examples 1 to 4>>

[Preparation of silicon-containing material]

Coal pitch serving as a carbon source and raw material silicon (purity 99.9% or more, average particle diameter 100 nm) were mixed and stirred in a ball mill while the temperature was controlled to be equal to or lower than the softening temperature of the pitch. Thereafter, the stirrer was replaced with a bead mill, and mixing was continued while the temperature was held to be equal to or higher than the softening temperature of the pitch. The resultant liquid mixture was extruded out of a slit to be like a sheet of 4 mm thick. The extruded sheet was heated to 800 °C in a nitrogen atmosphere furnace, and pressed as it is at a predetermined pressure with a pair of rollers heated to 550 °C. The pressed sheet was crushed with a jaw crusher, and further pulverized with a jet mill to have an average particle diameter of 6 $\mu$m, to obtain particles (particles P1) of silicon-containing material having a target single particle fracture strength (Fs). The composition of the particles P1 was analyzed by ICP (inductively coupled plasma atomic emission spectroscopy). The result found that the silicon element content was 50.1 mass%.

[Graphite material]

Natural graphite was subjected to cold isostatic pressing processing a predetermined number of times, into a graphite material having a target single particle fracture strength (Fc). The graphite material was pulverized with a jet mill, to obtain particles (particles P2) having an average particle diameter of 20 $\mu$m.

[Production of negative electrode]

The particles P1 and P2 were mixed in a predetermined mass ratio, to obtain a negative electrode active material. The negative electrode active material was mixed with sodium carboxymethyl cellulose (CMC), polyacrylic acid (PAA), and styrene-butadiene rubber (SBR) in a mass ratio of negative electrode active material : CMC : PAA : SBR = 97:1:1:1, to obtain a negative electrode mixture. Water was added to the negative electrode mixture, and then stirred using a mixer, to prepare a negative electrode slurry. The negative electrode slurry was applied onto a surface of copper foil which was a negative electrode current collector, to form an applied film. The applied film was dried and then rolled, to obtain a negative electrode with a negative electrode mixture layer formed on each of both sides of the copper foil.

[Production of positive electrode]

Lithium-nickel composite oxide ($LiNi_{0.88}Co_{0.09}Al_{0.03}O_2$), acetylene black, and polyvinylidene fluoride were mixed in a mass ratio of lithium-nickel composite oxide: acetylene black : polyvinylidene fluoride = 100:1:0.9, to obtain a mixture. N-methyl-2-pyrrolidone (NMP) was added to the resultant mixture, and then stirred using a mixer, to prepare a positive electrode slurry. The positive electrode slurry was applied onto a surface of aluminum foil which was a positive electrode current collector, to form an applied film. The applied film was dried and then rolled, to obtain a positive electrode with a positive electrode mixture layer formed on each of both sides of the aluminum foil.

[Preparation of nonaqueous electrolyte]

$LiPF_6$ was dissolved in a nonaqueous solvent, to prepare a nonaqueous electrolyte. The nonaqueous solvent used here was a mixed solvent of ethylene carbonate (EC) and ethyl methyl carbonate (EMC) in a volume ratio of EC:EMC = 30:70. The concentration of $LiPF_6$ in the nonaqueous electrolyte was 1.0 mol/L. Vinylene carbonate (VC) was dissolved in the nonaqueous electrolyte at a content of 2.0 mass%.

[Fabrication of secondary battery]

With a tab attached to each electrode, the positive electrode and the negative electrode were wound spirally with the separator interposed therebetween, to form an electrode group. The tab was positioned at the outermost layer. The electrode group was inserted into an outer body made of aluminum laminated film and dried under vacuum at 105 °C for two hours. Next, the nonaqueous electrolyte was injected into the outer body, and the opening of the outer body was sealed, to obtain a battery.

[Evaluation]

[Charge-discharge cycle test]

Each battery was constant-current charged at a current of 0.5It until the voltage reached 4.2 V, and then, constant-voltage charged at a constant voltage of 4.2 V until the current reached 1/20It. Next, a constant-current discharging was performed at a current of 0.5It until the voltage reached 2.5 V. With a rest period between charging and discharging set to 10 minutes, the charge-discharge cycle was performed 200 cycles, to calculate a capacity retention rate (R(A)) shown by the following equation.

Capacity retention rate (R(A)) (%) = (discharge capacity at 1st cycle / discharge capacity at 200th cycle) × 100

Note that (1/X)It represents a current. (1/X)It (A) = rated capacity (Ah) / X(h). X represents the time required to charge or discharge electricity equivalent to the rated capacity. For example, 0.5It means that X = 2 and the current value is the "rated capacity (Ah) / 2 (h)."

[Load characteristics]

Each battery was constant-current charged at a current of 0.5It until the voltage reached 4.2 V, and then, constant-voltage charged at a constant voltage of 4.2 V until the current reached 1/20It. Next, a constant-current discharging was performed at a current of 0.2It until the voltage reached 2.5 V. After charging similarly to the above, a constant-current discharging was performed at a current of 2It until the voltage reached 2.5 V, to measure a capacity retention rate (R(B)) shown by the following equation.

Capacity retention rate (R(B)) (%) = (discharge capacity at 2It / discharge capacity at 0.2It) × 100

[Expansion rate]

The rolled negative electrode was heated at 105 °C for 2 hours, and its thickness was measured, to determine an expansion rate shown by the following equation. When the expansion rate exceeds 2%, the internal pressure of the electrode group due to the expansion of the negative electrode increases significantly, and the nonaqueous electrolyte is pushed out from the electrode group, tending to fall into a state where the electrolyte is not present sufficiently in the vicinity of the negative electrode active material. Therefore, the expansion rate is preferably 2% or less.

Expansion rate (%) = (thickness after heating - thickness of negative electrode current collector) / (thickness after rolling - thickness of negative electrode current collector) × 100

The results are shown in Table 1, with the batteries of Examples denoted by A1 to A 14, and the batteries of Comparative Examples denoted by B1 to B4.

[Table 1]

| | content ratio of Si-containing material in negative electrode active material (mass%) | Fs (MPa) | Fc (MPa) | R(A) | R(B) | expansion rate (%) |
|---|---|---|---|---|---|---|
| Ex. 1 | 5 | 437 | 16 | 88 | 91 | 1 |
| Com. Ex. 1 | 5 | 275 | 16 | 75 | 92 | 0.9 |
| Ex. 2 | 5 | 352 | 16 | 85 | 92 | 0.9 |
| Ex. 3 | 5 | 378 | 16 | 88 | 92 | 1 |
| Ex. 4 | 5 | 460 | 16 | 89 | 90 | 1.1 |
| Ex. 5 | 5 | 528 | 16 | 88 | 90 | 1.2 |
| Com. Ex. 2 | 5 | 576 | 16 | 86 | 86 | 1.3 |
| Com. Ex. 3 | 5 | 437 | 8 | 80 | 85 | 1 |
| Ex. 6 | 5 | 437 | 10 | 84 | 89 | 1.1 |
| Ex. 7 | 5 | 437 | 12 | 86 | 91 | 1 |

(continued)

| | content ratio of Si-containing material in negative electrode active material (mass%) | Fs (MPa) | Fc (MPa) | R(A) | R(B) | expansion rate (%) |
|---|---|---|---|---|---|---|
| Ex. 8 | 5 | 437 | 20 | 88 | 91 | 1.1 |
| Ex. 9 | 5 | 437 | 40 | 85 | 90 | 1.6 |
| Com. Ex. 4 | 5 | 437 | 45 | 78 | 88 | 2.5 |
| Ex. 10 | 0.5 | 437 | 16 | 87 | 89 | 1 |
| Ex. 11 | 1 | 437 | 16 | 86 | 90 | 1 |
| Ex. 12 | 10 | 437 | 16 | 86 | 91 | 1.2 |
| Ex. 13 | 12 | 437 | 16 | 85 | 92 | 1.3 |
| Ex. 14 | 15 | 437 | 16 | 82 | 92 | 1.5 |

As shown in Table 1, in Examples 1 to 14 in which the single particle fracture strength of the graphite material was in a range of 10 to 40 MPa and the single particle fracture strength of the silicon-containing material was in a range of 350 to 550 MPa, the R(A) was 82% or more, and the R(B) was 89% or more, both of which are at high levels. On the other hand, in Comparative Example 1 in which the single particle fracture strength of the silicon-containing material was less than 350 MPa, the particles were brittle and unable to follow the expansion and contraction of silicon, which resulted in the R(A) being 75% at a low level. In Comparative Example 2 in which the single particle fracture strength of the silicon-containing material was above 550 MPa, the graphite was excessively compressed after rolling, which resulted in the R(B) being 86% at a low level. In Comparative Example 3 in which the single particle fracture strength of the graphite material was less than 10 MPa, the graphite was excessively compressed after rolling, which resulted in the R(B) being 85% at a low level. In Comparative Example 4, in which the single particle fracture strength of the graphite material was above 40 MPa, the residual stress during rolling was large, and the expansion rate of the negative electrode was significantly high.

<<Supplementary notes>>

The above description of embodiments discloses the following techniques.

(Technique 1)

A secondary battery, comprising

a positive electrode, a negative electrode, and an electrolyte, wherein
the negative electrode contains a negative electrode active material,
the negative electrode active material contains a silicon-containing material and a graphite material,
a single particle fracture strength of the graphite material is in a range of 10 to 40 MPa, and
a single particle fracture strength of the silicon-containing material is in a range of 350 to 550 MPa.

(Technique 2)

The secondary battery according to technique 1, wherein the single particle fracture strength of the graphite material is in a range of 12 to 20 MPa.

(Technique 3)

The secondary battery according to technique 1 or 2, wherein the single particle fracture strength of the silicon-containing material is in a range of 380 to 500 MPa.

(Technique 4)

The secondary battery according to any one of techniques 1 to 3, wherein the silicon-containing material is a composite material including a carbon phase and a silicon phase dispersed in the carbon phase.

(Technique 5)

The secondary battery according to any one of techniques 1 to 4, wherein a content ratio of the silicon-containing material relative to a total of the silicon-containing material and the graphite material in the negative electrode active material is 1 mass% or more and 12 mass% or less.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Industrial Applicability]

The present disclosure is applicable to secondary batteries, and is useful, for example, as a main power source for mobile communication devices, portable electronic devices, and the like.

[Reference Signs List]

1: electrode group, 2: positive electrode lead, 3: negative electrode lead, 4: battery case, 5: sealing plate, 6: negative electrode terminal, 7: gasket, 8: sealing plug

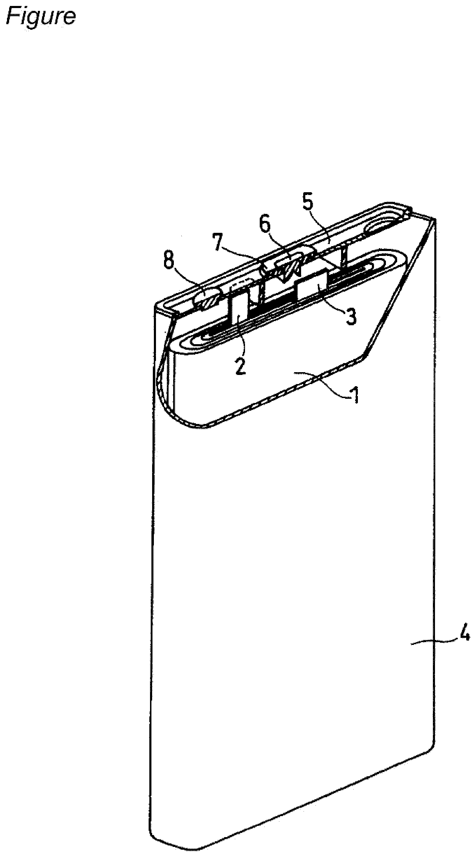

**Claims**

1. A secondary battery, comprising

   a positive electrode, a negative electrode, and an electrolyte, wherein
   the negative electrode contains a negative electrode active material,
   the negative electrode active material contains a silicon-containing material and a graphite material,
   a single particle fracture strength of the graphite material is in a range of 10 to 40 MPa, and
   a single particle fracture strength of the silicon-containing material is in a range of 350 to 550 MPa.

2. The secondary battery according to claim 1, wherein the single particle fracture strength of the graphite material is in a range of 12 to 20 MPa.

3. The secondary battery according to claim 1, wherein the single particle fracture strength of the silicon-containing material is in a range of 380 to 500 MPa.

4. The secondary battery according to claim 1, wherein the silicon-containing material is a composite material including a carbon phase and a silicon phase dispersed in the carbon phase.

5. The secondary battery according to any one of claims 1 to 4, wherein a content ratio of the silicon-containing material relative to a total of the silicon-containing material and the graphite material in the negative electrode active material is 1 mass% or more and 12 mass% or less.

# Figure

## INTERNATIONAL SEARCH REPORT

International application No.

**PCT/JP2023/027564**

| A. | CLASSIFICATION OF SUBJECT MATTER |
|---|---|

*H01M 4/133*(2010.01)i; *H01M 4/134*(2010.01)i; *H01M 4/36*(2006.01)i; *H01M 4/38*(2006.01)i; *H01M 4/587*(2010.01)i
FI:  H01M4/133; H01M4/134; H01M4/587; H01M4/38 Z; H01M4/36 E; H01M4/36 A

According to International Patent Classification (IPC) or to both national classification and IPC

| B. | FIELDS SEARCHED |
|---|---|

Minimum documentation searched (classification system followed by classification symbols)

H01M4/133; H01M4/134; H01M4/36; H01M4/38; H01M4/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/200343 A1 (PANASONIC INTELLECTUAL PROPERTY MANAGEMENT CO., LTD.) 07 October 2021 (2021-10-07) claims, paragraphs [0052]-[0054], examples | 1-5 |
| A | JP 2013-098058 A (SHIN ETSU CHEM CO LTD) 20 May 2013 (2013-05-20) entire text | 1-5 |
| A | JP 2012-009421 A (SHIN ETSU CHEM CO LTD) 12 January 2012 (2012-01-12) entire text | 1-5 |
| A | WO 2022/138916 A1 (PANASONIC INTELLECTUAL PROPERTY MANAGEMENT CO., LTD.) 30 June 2022 (2022-06-30) entire text | 1-5 |
| A | JP 2019-075199 A (TOYOTA MOTOR CORP) 16 May 2019 (2019-05-16) entire text | 1-5 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/027564**

| Patent document cited in search report | Publication date (day/month/year) | Patent family member(s) | Publication date (day/month/year) |
|---|---|---|---|
| WO 2021/200343 A1 | 07 October 2021 | US 2023/0132836 A1 paragraphs [0082]-[0084], examples, claims<br>EP 4131490 A1<br>CN 115552676 A | |
| JP 2013-098058 A | 20 May 2013 | US 2013/0108923 A1 entire text<br>EP 2590248 A2<br>CN 103094532 A<br>KR 10-2013-0048160 A<br>TW 201334271 A | |
| JP 2012-009421 A | 12 January 2012 | US 2011/0287317 A1 entire text<br>US 2015/0221931 A1<br>CN 102263242 A<br>KR 10-2011-0128739 A | |
| WO 2022/138916 A1 | 30 June 2022 | (Family: none) | |
| JP 2019-075199 A | 16 May 2019 | US 2019/0115585 A1 entire text<br>CN 109659498 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015185407 A